# EUROPÄISCHE PATENTSCHRIFT

(11) **EP 3 388 233 B1**
(45) Veröffentlichungstag und Bekanntmachung des Hinweises auf die Patenterteilung: **20.11.2019**
(21) Anmeldenummer: 18159168.6
(22) Anmeldetag: 28.02.2018
(51) Int. Cl.: B32B 7/12, B32B 15/09, B32B 15/20, B32B 27/08, B32B 27/32, B32B 27/36, B65D 85/00

(54) **VERWENDUNG EINES FOLIENVERBUNDS MIT EINER PET-FOLIE ALS FETTSÄURE-BARRIERE ZUR VERPACKUNG VON FETTSÄUREN, INSBESONDERE OMEGA-N-FETTSÄUREN ENTHALTENDEM VERPACKUNGSGUT**
USE OF A FILM COMPOSITE WITH A PET FILM AS FATTY ACID BARRIER FOR PACKAGING OF FATTY ACIDS, IN PARTICULAR PACKAGED GOODS CONTAINING OMEGA N FATTY ACIDS
UTILISATION D'UN FILM COMPOSITE POURVU D'UN FILM PET EN TANT QUE BARRIÈRE POUR L'ACIDE GRAS POUR EMBALLER LES ACIDES GRAS, EN PARTICULIER UN PRODUIT À EMBALLER CONTENANT LES ACIDES GRAS OMÉGA-N

(30) Priorität: 10.04.2017 DE 102017206138
(43) Veröffentlichungstag der Anmeldung: 17.10.2018
(73) Patentinhaber: Huhtamaki Flexible Packaging Germany GmbH & Co. KG, 87671 Ronsberg (DE)
(72) Erfinder: Knackert, Karoline, 87490 Haldenwang/Börwang (DE); Fenn-Barrabaß, Christian, 87634 Obergünzburg (DE)
(74) Vertreter: Ruttensperger Lachnit Trossin Gomoll

(56) Entgegenhaltungen:
- EP-A2- 1 405 873
- JP-A- 2004 001 251
- JP-A- 2004 017 984

## Beschreibung

Die vorliegende Erfindung betrifft eine Verwendung eines Folienverbunds, umfassend eine der Folienverbundaußenseite näher gelegene oder die Folienverbundaußenseite bildende Metallfolie, eine die Folienverbundinnenseite bildende Polyolefin-Siegelfolie und eine zwischen der Metallfolie und der Polyolefin-Siegelfolie gelegene Kunststoff-Barrierefolie, zur Verpackung von Fettsäure, insbesondere von Omega-3- oder/und Omega-9-Fettsäure enthaltendem Verpackungsgut, wobei die Kunststoff-Barrierefolie eine Polyesterfolie ist, gemäß dem Oberbegriff des Anspruchs 1.

Eine solche Verwendung ist aus der JP 2004-017984 A bekannt.

Fettsäure, insbesondere Omega-3- oder/und Omega-9-Fettsäure enthaltendes Verpackungsgut umfasst beispielsweise Fisch- und Hühnchenfleisch-haltige Produkte, wie sie aus dem Nahrungsmittelbereich, insbesondere dem Tiernahrungsmittelbereich, bekannt sind. Aber auch Öl-haltige Verpackungsgüter, wie Salatdressings, können derartige Fettsäuren enthalten. Der Folienverbund der vorliegenden Erfindung soll daher zur Verpackung von Lebensmitteln verwendet werden.

Derzeit werden solche Verpackungsgüter unter Verwendung von Folienverbünden verpackt, welche die genannte Metallfolie und die genannte Polyolefin-Siegelfolie aufweisen, wobei die zwischen diesen gelegene Kunststoff-Barrierefolie als Fettsäure-Barriere aus orientiertem Polyamid (OPA) gebildet ist. Wie bekannt ist, wird die Metallfolie als Sauerstoff- und Wasserdampfbarriere verwendet, um das Verpackungsgut länger haltbar lagern zu können. Die Kunststoff-Barrierefolie ist als Barriere gegen die genannten Fettsäuren vorgesehen, die eine nachteilige Wirkung auf die Metallfolie haben können, wenn sie bis zu dieser gelangen.

Nun hat sich herausgestellt, dass OPA zumindest dann, wenn es in wirtschaftlich vertretbaren Foliendicken verwendet wird, nach neuesten Maßstäben bemessen keinen ausreichenden Schutz der Metallfolie vor Fettsäuren bietet, die ausgehend von einem von dem Folienverbund wenigstens teilweise eingefassten Verpackungsraum nach außen migrieren. Die Fettsäuren können die OPA-Barrierefolie wenigstens zum Teil durchdringen und erreichen die Metallfolie, wo sie zum einen eine Oxidation der der Folienverbundinnenseite zugewandten Oberfläche der Metallfolie bewirken können und wo sie zum anderen durch Anreicherung zu einer Verseifung der Aluminiumoberfläche führen können. Die Folge kann eine Delamination des Folienverbunds an der der Folienverbundinnenseite zugewandten Oberfläche der Metallfolie sein. Dies ist nachvollziehbarerweise nicht wünschenswert.

Man hat daher im Stand der Technik versucht, die Delamination durch Einsatz besonderer chemikalienbeständiger Klebstoffe zu verhindern, die allerdings zum einen nicht lebensmittelkonform sind und die zum anderen gegen die angreifenden Fettsäuren ebenfalls nur begrenzte Stabilität besitzen. Auf die der Folienverbundinnenseite und damit den Fettsäuren zugewandten Metallfolienoberflächen können außerdem Einbrennlacke aufgetragen sein, die eine Oxidation oder/und Verseifung der Metalloberfläche verhindern. Allerdings ist diese Lösung nur bei dickeren Metallfolien mit einer Dicke im deutlich zweistelligen Mikrometer-Bereich anwendbar. An den für Verpackungsfolien und deren Folienverbünde wünschenswerten dünneren Metallfolien mit Dicken im einstelligen Mikrometer-Bereich sind die Einbrennlacke technisch nicht sinnvoll anwendbar.

Außerdem enthalten die fettsäurebeständigeren Folienverbünde des Standes der Technik häufig Chemikalien wie Bisphenol-A-diglycidether ("BADGE" oder auch "DGEBA") oder Epoxy, was aufgrund ihrer chemischen Wirkung gerade im Bereich der Lebensmittelverpackungen nicht wünschenswert ist bzw. von immer mehr Anwendern abgelehnt wird.

Es ist daher Aufgabe der vorliegenden Erfindung, eine wirtschaftlich vertretbare Lösung zur Verpackung von Fettsäure, insbesondere von Omega-3- oder/und Omega-9-Fettsäure enthaltendem Verpackungsgut vorzuschlagen, welches frei von aus lebensmitteltechnischer und lebensmittelrechtlicher Sicht kritischen Chemikalien ist und daher ohne Weiteres zur Verpackung von Fettsäure-haltigen, insbesondere von Omega-3- oder/und Omega-9-Fettsäure-haltigen Lebensmitteln verwendbar ist.

Erfindungsgemäß wird die Aufgabe durch eine Verwendung mit allen Merkmalen des Anspruchs 1 gelöst.

Es hat sich herausgestellt, dass Polyester, insbesondere Polyethylenterephthalat, ganz hervorragende Barriereeigenschaften gegenüber Fettsäuren, insbesondere gegenüber den genannten Fettsäuren, besitzt. Mit einer Polyesterfolie als der zwischen der Metallfolie und der Polyolefin-Siegelfolie angeordneten Kunststoff-Barrierefolie kann bei bisher üblichen Barrierefoliendicken im Bereich von unter 50 µm die Migration von Fettsäuren durch die Barrierefolie hindurch zur Metallfolie hin erheblich vermindert oder gar vollständig verhindert werden.

Dadurch, dass zu der der Folienverbundinnenseite zugewandten Metalloberfläche keine oder kaum noch Fettsäuren gelangen, können herkömmliche lebensmitteltaugliche Haftvermittler zur Verbindung der betreffenden Metalloberfläche mit einer Kunststofffolie, etwa mit der Polyesterfolie, verwendet werden.

Grundsätzlich kann die Polyesterfolie ungereckt sein, etwa als Cast-Folie. Die Barrierewirkung der Polyesterfolie gegenüber einer Migration der genannten Fettsäuren in Dickenrichtung durch die Folie hindurch kann jedoch noch weiter dadurch erhöht werden, dass die Polyesterfolie monoaxial oder biaxial gereckt ist.

Dabei bietet eine biaxial gereckte Polyesterfolie eine noch größere Barrierewirkung als eine monoaxial gereckte Polyesterfolie mit identischem Flächengewicht. In Versuchen hat sich dabei herausgestellt, dass für die Bereitstellung einer optimalen Barrierewirkung einer Polyesterfolie das Reckverhältnis verglichen mit der ungereckten Polyesterfolie in einer Reckachsenrichtung zwischen 1:2 und 1:4 betragen sollte. Das Reckverhältnis gilt, wie gesagt, für jeweils eine Reckachsenrichtung, sodass eine biaxial gereckte Polyesterfolie in jeder Reckachsenrichtung vorteilhafterweise mit einem Reckverhältnis von zwischen 1 : 2 und 1 : 4 gereckt ist.

Erfindungsgemäß ist - wiederum zur Erhöhung der Barrierewirkung -die Polyolefin-Siegelfolie monoaxial oder biaxial gereckt.

Beispielsweise können die Polyesterfolie und die Polyolefin-Siegelfolie eine hinsichtlich Reckrichtung, Reckart und Reckbetrag identische Reckung aufweisen. In diesem Fall können die Polyesterfolie und die Polyolefin-Siegelfolie zur Vereinfachung des Herstellungsverfahrens zur Herstellung des Folienverbundes als Coextrusionsfolie gebildet sein.

Als Coextrusionsfolie können somit die Polyesterfolie und die Polyolefin-Siegelfolie in einem Coextrusionsarbeitsgang aus einer entsprechenden Mehrfach-Extrusionsdüse gemeinsam extrudiert und als coextrudierter Unter-Folienverbund gemeinsam in an sich bekannter Weise gereckt werden. Zur bestmöglichen Verbindung der Polyolefin-Siegelfolie und der Polyesterfolie können abhängig von den als Polyester und Polyolefin verwendeten konkreten Werkstoffen Haftvermittler zwischen Polyesterfolie und Polyolefin-Siegelfolie als Haftvermittlerlage zwischenangeordnet werden, wobei hierfür bekannte lebensmittelzugelassene Haftvermittler verwendet werden können. Bei der möglichen erfindungsgemäßen Ausführungsform einer coextrudierten Polyester- und Polyolefin-Siegelfolie kann aufgrund des angewendeten Coextrusionsverfahrens besonders bevorzugt eine Extrusionshaftvermittlerlage zwischen der Polyesterfolie und der mit dieser coextrudierten Polyolefin-Siegelfolie aufgetragen sein.

Es ist jedoch nicht zwingend notwendig, die Polyesterfolie und die Polyolefin-Siegelfolie gemeinsam in einem Arbeitsgang zu coextrudieren. Alternativ kann vorgesehen sein, dass die Polyesterfolie und die Polyolefin-Siegelfolie unter Zwischenanordnung einer Haftvermittlerlage durch Kaschierung miteinander verbunden sind.

Der Vorteil einer Verbindung von Polyesterfolie und Polyolefin-Siegelfolie mittels Kaschierung liegt in der größeren Freiheit der Wahl der einzelnen Folien. Zum einen kann bei durch Kaschierung verbundenen Folien: Polyesterfolie und Polyolefin-Siegelfolie, die Polyesterfolie eine von der Polyolefin-Siegelfolie abweichende Reckung aufweisen. Auch für die Kaschierung können beliebige lebensmitteltaugliche und zur Lebensmittelverpackung zugelassene Haftvermittler als "Kaschierkleber" verwendet werden. Mit den beiden vorgestellten alternativen Ausbildungen eines coextrudierten oder eines kaschierten Unter-Folienverbundes aus Polyesterfolie und damit verbundener Polyolefin-Siegelfolie ist also einmal eine vereinfachte Fertigung bei geringerer Freiheit in der Wahl der Produktparameter des entstandenen Unter-Folienverbundes und ein anderes Mal ein geringfügig höherer Fertigungsaufwand bei damit verbundener höherer Freiheit in der Wahl der Produktparameter des entstandenen Unter-Folienverbundes gegenübergestellt. Der Durchschnittsfachmann kann für den jeweiligen Anwendungsfall den jeweils geeignetsten Folienverbund und seine Herstellung auswählen.

Die Metallfolie ist bevorzugt eine in Lebensmittelanwendungen bewährte und für diese unbedenkliche Aluminiumfolie. Sie weist eine Dicke im Bereich zwischen 6 bis 12 µm, bevorzugt im Bereich von 7 bis 9 µm auf, was für die durch die Aluminiumfolie gewünschte Barrierewirkung gegenüber einer Migration von Sauerstoff oder Wasserdampf von außen in den Verpackungsraum einer unter Beteiligung des Folienverbunds gebildeten Verpackung hinein ausreichend ist.

Wie oben bereits angedeutet wurde, ist die Polyesterfolie bevorzugt eine Polyethylenterephthalatfolie. Die Polyesterfolie weist bevorzugt eine Dicke im Bereich von 5 µm bis 30 µm auf.

Grundsätzlich kann die Polyolefin-Siegelfolie eine beliebige Polyolefinfolie sein. Beispielsweise kann diese eine Polyethylen-Siegelfolie sein. Zu beachten ist jedoch, dass es gerade im Bereich der Lebensmittelverpackungen häufig auf eine Sterilisierbarkeit der Verpackungen ankommt, um deren Inhalt eine längere Haltbarkeit zu verleihen. Dabei wird häufig das Verfahren der sogenannten "Nass-Sterilisation" verwendet, bei welchem die für die Sterilisation notwendige thermische Energie durch Wasserdampf in die unter Beteiligung des hier vorgestellten Folienverbunds gebildeten Verpackungen eingetragen wird. Hierbei hat sich Polypropylen als Siegelmedium im Vorgang der Nass-Sterilisation als thermisch beständiger erwiesen, was an seinen gegenüber Polyethylen materialbedingt höheren Erweichungs- und Schmelztemperaturen liegt. Es ist daher bevorzugt, dass die Polyolefin-Siegelfolie eine Polypropylenfolie ist.

Es sei dabei nur am Rande erwähnt, dass die Polyolefin-Siegelfolie eine mehrlagige Polyolefin-Siegelfolie sein kann, bei welcher das gleiche Polyolefin lagenweise in unterschiedlich dichter Ausprägung vorgesehen ist.

Weiter kann vorgesehen sein, dass die Polyolefin-Siegelfolie eine Dicke im Bereich von 55 µm bis 30 µm aufweist. Dabei ist bevorzugt daran gedacht, dass ein Unter-Folienverbund aus Polyesterfolie, Polyolefin-Siegelfolie und zwischen diesen etwaig angeordneter Haftvermittlerlage eine Gesamtdicke von zwischen 60 und 65 µm aufweisen sollte. Dabei ist jedoch nicht ausgeschlossen, dass der Unter-Folienverbund auch größere Dicken aufweisen kann, wobei dann dennoch die oben angegebene bevorzugte Dicke der Polyesterfolie gilt, sodass ein etwaig über eine Dicke von 65 µm hinausreichender Unter-Folienverbund seine über den Wert von 60 bis 65 µm hinausreichende Dicke im Wesentlichen einem Dickenzuwachs der Polyolefin-Siegelfolie verdanken wird.

Die oben angegebene Lagenreihenfolge aus Metallfolie, Polyesterfolie und Polyolefin-Siegelfolie in der Richtung von Folienverbundaußenseite nach Folienverbundinnenseite soll nicht bedeuten, dass nur die genannten Folien vorgesehen sind. Die genannten Folien bilden lediglich die Mindestanforderung an den Folienverbund, um die die genannten Fettsäuren aufweisenden Verpackungsgüter sicher verpacken zu können. Wie bereits angedeutet, dient die Metallfolie als Barrierefolie gegenüber dem Eintritt von Sauerstoff und Wasserdampf von außen in den Verpackungsraum einer unter Beteiligung des Folienverbunds gebildeten Verpackung. Die Polyesterfolie dient dem Schutz der Metallfolie vor angreifenden Fettsäuren vom Verpackungsraum her und die Polyolefin-Siegelfolie sorgt für eine grundsätzliche Siegelverbindbarkeit des Folienverbundes mit Folienverbünden mit kompatiblen Siegelfolien, bevorzugt mit Folienstücken des identischen Folienverbunds, um damit einen Verpackungsraum wenigstens teilweise oder bevorzugt vollständig zu umschließen. Es kann jedoch durchaus vorgesehen sein, dass zwischen der Metallfolie und der Polyesterfolie eine weitere Folie, insbesondere thermoplastische Folie, vorgesehen ist. Beispielsweise kann zwischen der Metallfolie und der Polyesterfolie eine weitere Polyolefinfolie angeordnet sein. Aus fertigungstechnischen Gründen ist die Polyolefinfolie vorzugsweise materialidentisch mit der Polyolefin-Siegelfolie. Auch die Anordnung mehrerer weiterer Folien zwischen Polyesterfolie und Metallfolie soll nicht ausgeschlossen sein, wobei jedoch mit zunehmender Folienanzahl des Folienverbundes dessen Wirtschaftlichkeit beeinträchtigt wird.

Wenngleich dies grundsätzlich möglich ist, wird die Metallfolie an ihrer von der Polyesterfolie wegweisenden Seite nicht unmittelbar die Außenseite des Folienverbundes bilden. Auf der Metallfolie kann wenigstens eine weitere Lage vorgesehen sein, beispielsweise ein Farbauftrag zur Bereitstellung von Informationen über den Inhalt einer unter Beteiligung des Folienverbundes gebildeten Verpackung. Gegebenenfalls kann über dem Farbauftrag ein Schutzlack aufgetragen sein, um den Farbauftrag gegen äußere Einflüsse zu schützen.

Alternativ oder zusätzlich kann wenigstens eine Kunststofffolie auf der nach außen weisenden Seite der Metallfolie mit dieser verbunden sein, in der Regel unter Zwischenanordnung eines Haftvermittlermaterials. Selbstredend können auch mehr als eine Kunststofffolie an der Außenseite der Metallfolie vorgesehen sein, einschließlich des oben erwähnten Auftrags einer oder mehrerer Druckfarben mit eventuellem darüber liegendem Schutzlack oder einer über dieser liegenden transparenten Schutzfolie. Daher kann ganz grundsätzlich vorgesehen sein, dass der Folienverbund zwischen der Folienverbundaußenseite und der Metallfolie wenigstens eine weitere Folienverbundlage aufweist.

Nachfolgend wird die Erfindung anhand der beiliegenden Zeichnungen näher erläutert werden. Es stellt dar:
- Figur 1: einen grobschematischen Querschnitt durch eine erste erfindungsgemäße Ausführungsform eines Folienverbundes zur Verwendung für die Verpackung von Omega-3- und Omega-9-haltigen Verpackungsgütern, und
- Figur 2: eine zweite erfindungsgemäße Ausführungsform eines zu der genannten Verwendung vorgesehenen Folienverbunds.

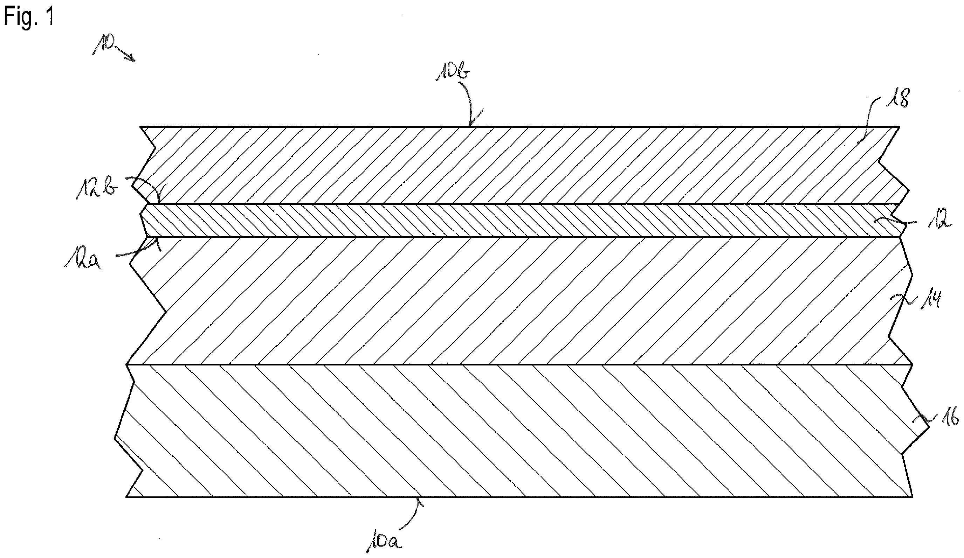

In Figur 1 ist eine erste Ausführungsform eines erfindungsgemäßen Folienverbunds zur Verwendung für die Verpackung von Fettsäuren, insbesondere Omega-3- oder/und Omega-9-Fettsäuren enthaltenden Verpackungsgütern allgemein mit 10 bezeichnet. Eine Innenseite des Folienverbunds 10 ist mit 10a, dessen Außenseite mit 10b bezeichnet.

Der Folienverbund 10 umfasst als wesentliche Bestandteile eine Aluminiumfolie 12 als Sauerstoff- und Wasserdampfbarriere, eine Polyethylenterephthalatlage 14 und eine Siegellage 16, bevorzugt aus Polypropylen, da diese zwar mit vergleichsweise geringem thermischen Energieeintrag siegelbar ist, die erzielte Siegelung jedoch temperaturbeständiger ist als eine ebenfalls verwendbare Polyethylen-Siegellage.

Weiter weist der Folienverbund 10 zur Außenseite 10b hin eine weitere Kunststofflage 18 auf, welche beispielsweise ebenso aus Polyethylenterephthalat gebildet sein kann, etwa mit einer Dicke von zwischen 10 bis 20 µm, insbesondere von 12 µm.

Die beiden Folien 14 und 16, welche unter Zwischenanordnung einer in Figur 1 nicht dargestellten Haftvermittlerlage miteinander verbunden sind, weisen insgesamt eine Dicke von 60 bis 65 µm, bevorzugt von 60 µm auf. Die PET-Lage 14 ist wenigstens 5 µm dick und ist bevorzugt höchstens 30 µm dick.

Die Polypropylen-Siegellage 16 dient zur Herstellung einer Siegelverbindung mit anderen Polypropylen-Siegellagen, vorzugsweise mit Siegellagen 16 von Folienstücken aus dem gleichen Folienverbund 10. Beispielsweise kann mit dem Folienverbund 10 eine Beutel- oder Stehbeutelverpackung gebildet werden.

An der Folienverbundinnenseite 10a ist der Folienverbund 10 gemäß seiner erfindungsgemäßen Verwendung in Kontakt mit einem Füllgut, das Fettsäuren, insbesondere Omega-3- oder/und Omega-9-Fettsäuren, enthält, wie etwa Fisch oder Hühnchenfleisch. Beispielsweise kann der Folienverbund 10 zur Verpackung von entsprechende Fleischsorten enthaltender Tiernahrung verwendet werden.

Mit den früher zur Verpackung derartiger Produkte verwendeten Folien konnte die Aluminiumlage 12 nicht ausreichend dauerhaft vor den Wirkungen der genannten Fettsäuren geschützt werden. Diese konnten die zwischen der Aluminiumlage 12 und der Folienverbundinnenseite 10a gelegenen Folienverbundschichten durchwandern und erreichten die der Folienverbundinnenseite 10a zugewandte Oberfläche 12a der Aluminiumlage 12, wo sie eine Delamination des Folienverbunds fördernde Oxidation oder/und Verseifung der Aluminiumoberfläche 12a bewirkten.

Es hat sich herausgestellt, dass Polyester, insbesondere PET, bei vertretbaren Materialdicken und Flächengewichten eine hervorragende Migrationsbarriere für die genannten Fettsäuren bildet, sodass die PET-Lage 14 ausreicht, um die Aluminiumlage 12 vor dem Angriff der genannten Fettsäuren zu schützen. Aus diesem Grunde kann zwischen der Aluminiumlage 12 und der PET-Lage 14 ein herkömmlicher Haftvermittler angeordnet sein, um die beiden Lagen 12 und 14 miteinander zu verbinden. Eine vor Fettsäureangriff sichernde Ausrüstung der der Folienverbundinnenseite 10a zugewandten Aluminiumoberfläche 12a kann somit entfallen.

Bevorzugt ist die PET-Lage 14 in wenigstens einer Raumrichtung gereckt, besonders bevorzugt ist sie biaxial gereckt, und zwar mit einem Reckverhältnis von 1 : 2 bis 1 : 4 in jeder der orthogonalen Reckrichtungen. Durch die beschriebene Reckung wird die eine Migration von Fettsäuren hindernde oder mindernde Barrierewirkung der PET-Lage 14 noch verstärkt, wobei ausdrücklich darauf hingewiesen wird, dass auch eine ungereckte PET-Lage bereits eine hervorragende Fettsäure-Barrierewirkung zeigt.

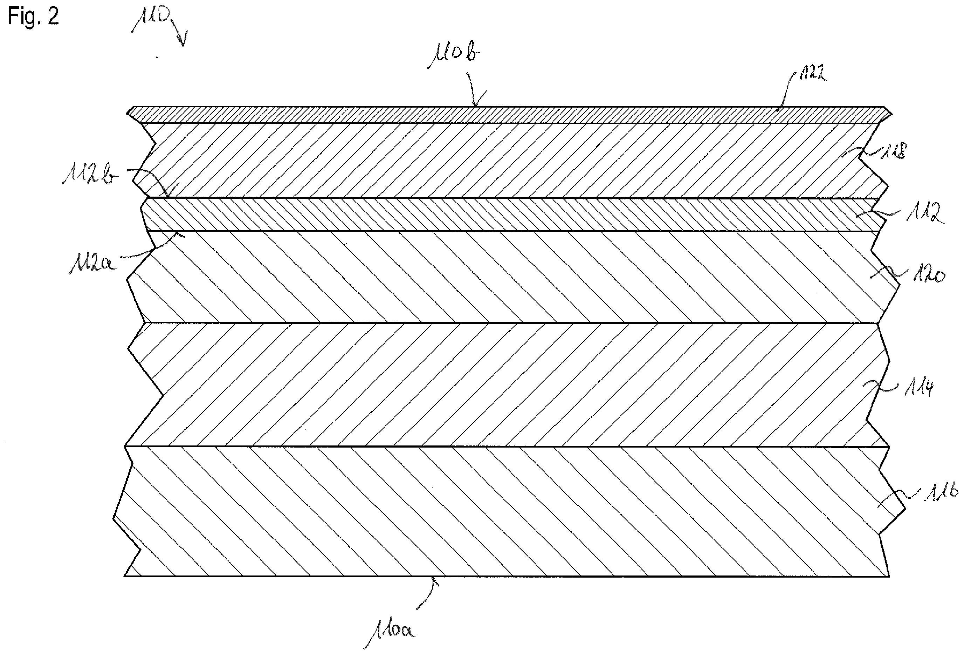

In Figur 2 ist eine zweite Ausführungsform eines erfindungsgemäßen Folienverbunds zur genannten Verwendung für die Verpackung von Fettsäure, insbesondere von Omega-3- oder/und Omega-9-Fettsäure enthaltenden Verpackungsgütern gezeigt.

Gleiche und funktionsgleiche Bauteile und Bauteilabschnitte wie in Figur 1 sind mit gleichen Bezugszeichen versehen, jedoch erhöht um die Zahl 100.

Die Ausführungsform von Figur 2 wird nachfolgend lediglich insofern beschrieben werden, als sie sich von Figur 1 unterscheidet, auf deren Beschreibung ansonsten auch zur Beschreibung der Ausführungsform der Figur 2 verwiesen wird.

Wie zunächst in Figur 2 zu erkennen ist, ist zwischen der Aluminiumfolie 112 und der PET-Lage 114 eine weitere Kunststoffschicht 120 angeordnet, welche beispielsweise aus Polypropylen gebildet sein kann, insbesondere aus dem gleichen Polypropylen wie die Siegellage 116.

Die Lage 120 ist dabei lediglich beispielhaft dargestellt. Statt einer einzigen Lage 120 können mehrere, auch mehrere unterschiedliche Lagen zwischen der Aluminiumfolie 112 und der PET-Lage 114 vorgesehen sein.

Grundsätzlich ist auch denkbar, zwischen der PET-Lage 114 und der Polypropylen-Siegellage 116 eine oder mehrere weitere Kunststofflagen anzuordnen. Da jedoch die PET-Lage 114 - ebenso wie PET-Lage 14 der ersten Ausführungsform - alle im Folienverbund näher an der Folienverbundaußenseite 10b bzw. 110b gelegenen Folien vor dem Angriff der genannten Fettsäuren von der Folienverbundinnenseite 10 a bzw. 110a her schützt, ist es bevorzugt, die PET-Lage 14 bzw. 114 möglichst nah an der Siegellage 16 bzw. 116 anzuordnen.

Wie weiter in Figur 2 gezeigt ist, ist auf der von der Aluminiumfolie 112 wegweisenden Außenseite der Kunststofflage 118 eine weitere Lage 122 aufgetragen. Es kann sich dabei um einen Druckauftrag mit Druckfarbe handeln, um an der Folienverbundaußenseite Information über den Inhalt einer unter Beteiligung des Folienverbunds 10 bzw. 110 gebildeten Verpackung oder/und über den verantwortlichen Hersteller bereitzustellen.

Abweichend von der Darstellung von Figur 2 kann der Druckauftrag 112 zur Folienverbundaußenseite hin von einem Schutzlack oder einer transparenten Folie überzogen sein. Ebenso kann der Druckauftrag unter Weglassung der Lage 118 direkt auf die Aluminiumfolie 112, genauer auf deren Außenseite 112b, aufgetragen sein.

## Patentansprüche

1. Verwendung eines Folienverbunds (10; 110), umfassend eine der Folienverbundaußenseite (10b; 110b) näher gelegene oder die Folienverbundaußenseite (10b; 110b) bildende Metallfolie (12; 112), eine die Folienverbundinnenseite (10a; 110a) bildende Polyolefin-Siegelfolie (16; 116) und eine zwischen der Metallfolie (12; 112) und der Polyolefin-Siegelfolie (16; 116) gelegene Kunststoff-Barrierefolie (14; 114), zur Verpackung von Fettsäure, insbesondere von Omega-3- oder/und Omega-9-Fettsäure enthaltendem Verpackungsgut, wobei die Kunststoff-Barrierefolie (14; 114) eine Polyesterfolie (14; 114) ist,
**dadurch gekennzeichnet, dass** die Polyolefin-Siegelfolie (16; 116) zur Erhöhung der Barrierewirkung monoaxial oder biaxial gereckt ist.

2. Verwendung eines Folienverbunds (10; 110) nach Anspruch 1,
**dadurch gekennzeichnet, dass** die Polyesterfolie (14; 114) monoaxial oder biaxial gereckt ist.

3. Verwendung eines Folienverbunds (10; 110) nach Anspruch 2,
**dadurch gekennzeichnet, dass** das Reckverhältnis der Polyesterfolie (14; 114) in einer Reckachsenrichtung zwischen 1 : 2 und 1 : 4 beträgt.

4. Verwendung eines Folienverbunds (10; 110) nach einem der vorhergehenden Ansprüche,
**dadurch gekennzeichnet, dass** die Polyesterfolie (14; 114) und die Polyolefin-Siegelfolie (16; 116) als Coextrusionsfolie, gegebenenfalls unter Zwischenanordnung einer Haftvermittlerlage, insbesondere Extrusionshaftvermittlerlage, gebildet sind.

5. Verwendung eines Folienverbunds (10; 110) nach einem der Ansprüche 1 bis 3,
**dadurch gekennzeichnet, dass** die Polyesterfolie (14; 114) und die Polyolefin-Siegelfolie (16; 116) unter Zwischenanordnung einer Haftvermittlerlage durch Kaschierung miteinander verbunden sind.

6. Verwendung eines Folienverbunds (10; 110) nach einem der vorhergehenden Ansprüche,
**dadurch gekennzeichnet, dass** die Polyesterfolie (14; 114) eine Polyethylenterephthalatfolie (14; 114) ist.

7. Verwendung eines Folienverbunds (10; 110) nach einem der vorhergehenden Ansprüche,
**dadurch gekennzeichnet, dass** die Polyesterfolie (14; 114) eine Dicke im Bereich von 5 µm bis 30 µm aufweist.

8. Verwendung eines Folienverbunds (10; 110) nach einem der vorhergehenden Ansprüche,
**dadurch gekennzeichnet, dass** die Polyolefin-Siegelfolie (16; 116) eine Polypropylenfolie (16; 116) ist.

9. Verwendung eines Folienverbunds (10; 110) nach einem der vorhergehenden Ansprüche,
**dadurch gekennzeichnet, dass** die Polyolefin-Siegelfolie (16; 116) eine Dicke im Bereich von 55 µm bis 30 µm aufweist.

10. Verwendung eines Folienverbunds (10; 110) nach einem der vorhergehenden Ansprüche,
**dadurch gekennzeichnet, dass** zwischen der Metallfolie (112) und der Polyesterfolie (114) eine weitere Kunststofffolie (120), insbesondere Polyolefinfolie (120), angeordnet ist.

11. Verwendung eines Folienverbunds (10; 110) nach einem der vorhergehenden Ansprüche,
**dadurch gekennzeichnet, dass** der Folienverbund (10; 110) zwischen der Folienverbundaußenseite (10a; 110a) und der Metallfolie (12; 112) wenigstens eine weitere Folienverbundlage (18; 118, 122) aufweist.

12. Verwendung eines Folienverbunds (10; 110) nach einem der vorhergehenden Ansprüche zur Verpackung von Lebensmitteln, insbesondere Lebensmitteln für Menschen oder Tiere.

## Claims

1. Use of a film composite (10; 110), encompassing a metal foil (12; 112) that is located closer to the film composite outer side (10b; 110b) or that constitutes the film composite outer side (10b; 110b), a polyolefin sealing film (16; 116) constituting the film composite inner side (10a; 110a), and a plastic barrier film (14; 114) located between the metal foil (12; 112) and the polyolefin sealing film (16; 116), to package packaged material containing fatty acid, in particular omega-3 fatty acid and/or omega-9 fatty acid, the plastic barrier film (14; 114) being a polyester film (14; 114),
wherein the polyolefin sealing film (16; 116) is monoaxially or biaxially stretched in order to enhance the barrier effect.

2. The use of a film composite (10; 110) according to Claim 1, wherein the polyester film (14; 114) is monoaxially or biaxially stretched.

3. The use of a film composite (10; 110) according to Claim 2, wherein the stretching ratio of the polyester film (14; 114) in one axial stretching direction is between 1:2 and 1:4.

4. The use of a film composite (10; 110) according to one of the preceding claims, wherein the polyester film (14; 114) and the polyolefin sealing film (16; 116) are constituted as coextruded films, optionally with interposition of an adhesion promotion layer, in particular an extruded adhesion promotion layer.

5. The use of a film composite (10; 110) according to one of Claims 1 to 3, wherein the polyester film (14; 114) and the polyolefin sealing film (16; 116) are attached to one another by lamination with interposition of an adhesion promotion layer.

6. The use of a film composite (10; 110) according to one of the preceding claims, wherein the polyester film (14; 114) is a polyethylene terephthalate film (14; 114).

7. The use of a film composite (10; 110) according to one of the preceding claims, wherein the polyester film (14; 114) has a thickness in the range from 5 µm to 30 µm.

8. The use of a film composite (10; 110) according to one of the preceding claims, wherein the polyolefin sealing film (16; 116) is a polypropylene film (16; 116).

9. The use of a film composite (10; 110) according to one of the preceding claims, wherein the polyolefin sealing film (16; 116) has a thickness in the range from 55 µm to 30 µm.

10. The use of a film composite (10; 110) according to one of the preceding claims, wherein a further plastic film (120), in particular a polyolefin film (120), is arranged between the metal foil (112) and the polyester film (114).

11. The use of a film composite (10; 110) according to one of the preceding claims, wherein the film composite (10; 110) comprises at least one further film composite layer (18; 118, 122) between the film composite outer side (10a; 110a) and the metal foil (12; 112).

12. The use of a film composite (10; 110) according to one of the preceding claims for packaging foods, in particular foods for humans or animals.

## Revendications

1. Utilisation d'un film composite (10; 110) comprenant un film métallique (12; 112) plus proche du côté extérieur du film composite (10b; 110b) ou formant le côté extérieur du film composite (10b; 110b), un film de scellement en polyoléfine (16; 116) formant le côté intérieur du film composite (10a; 110a), et un film barrière en plastique (14; 114) interposé entre le film métallique (12; 112) et le film de scellement en polyoléfine (16; 116), pour emballer des produits à emballer contenant de l'acide gras, en particulier des produits à emballer contenant de l'acide gras oméga-3 et/ou oméga-9, le film barrière en plastique (14; 114) étant un film de polyester (14; 114),
**caractérisé en ce que** le film de scellement en polyoléfine (16; 116) est étiré monoaxialement ou biaxialement pour augmenter l'effet barrière.

2. Utilisation d'un film composite (10; 110) selon la revendication 1,
**caractérisée en ce que** le film de polyester (14; 114) est étiré monoaxialement ou biaxialement.

3. Utilisation d'un film composite (10; 110) selon la revendication 2,
**caractérisée en ce que** le rapport d'étirage du film de polyester (14; 114) dans une direction d'axe d'étirage est compris entre 1 : 2 et 1 : 4.

4. Utilisation d'un film composite (10; 110) selon l'une des revendications précédentes, **caractérisée en ce que** le film de polyester (14; 114) et le film de scellement en polyoléfine (16; 116) sont formés sous forme de film de coextrusion, éventuellement avec une disposition intermédiaire d'une couche de promoteur d'adhésion, en particulier une couche de promoteur d'adhésion à extrusion.

5. Utilisation d'un film composite (10; 110) selon l'une des revendications 1 à 3, **caractérisé en ce que** le film de polyester (14; 114) et le film de scellement en polyoléfine (16; 116) sont assemblés par laminage avec interposition d'une couche de promoteur d'adhésion.

6. Utilisation d'un film composite (10; 110) selon l'une des revendications précédentes, **caractérisé en ce que** le film de polyester (14; 114) est un film de polyéthylène téréphtalate (14; 114).

7. Utilisation d'un film composite (10; 110) selon l'une des revendications précédentes, **caractérisée en ce que** le film de polyester (14; 114) a une épaisseur comprise entre 5 µm et 30 µm.

8. Utilisation d'un film composite (10; 110) selon l'une des revendications précédentes, **caractérisée en ce que** le film de scellement en polyoléfine (16; 116) est un film de polypropylène (16; 116).

9. Utilisation d'un film composite (10; 110) selon l'une des revendications précédentes, **caractérisée en ce que** le film de scellement en polyoléfine (16; 116) a une épaisseur comprise entre 55 µm et 30 µm.

10. Utilisation d'un film composite (10; 110) selon l'une des revendications précédentes, **caractérisée en ce qu'**un autre film en plastique (120), en particulier un film de polyoléfine (120), est disposé entre le film métallique (112) et le film de polyester (114).

11. Utilisation d'un film composite (10; 110) selon l'une des revendications précédentes, **caractérisée en ce que** le film composite (10; 110) comporte au moins une autre couche de film composite (18; 118, 122) entre le côté extérieur (10a; 11a) du film composite et le film métallique (12; 112).

12. Utilisation d'un film composite (10; 110) selon l'une des revendications précédentes pour l'emballage de denrées alimentaires, en particulier de denrées alimentaires pour l'homme ou les animaux.
